# EUROPEAN PATENT APPLICATION

(11) **EP 4 704 398 A1**
(43) Date of publication of application: **04.03.2026**
(21) Application number: 25196965.5
(22) Date of filing: 20.08.2025
(51) Int. Cl.: H04L 45/28, H04L 45/00, H04L 45/24

(54) **STATELESS NETWORK FAILURE RECOVERY**

(30) Priority: 26.08.2024 US 202463687298 P; 26.08.2024 US 202463687294 P; 27.12.2024 US 202419004065; 27.12.2024 US 202419004107
(71) Applicant: Microsoft Technology Licensing, LLC, Redmond, WA 98052 (US)
(72) Inventor: KABBANI, Abdul, Redmond, 98052 (US); HOEFLER, Torsten, Redmond, 98052 (US)
(74) Representative: CMS Cameron McKenna Nabarro Olswang LLP

(57) **Abstract**

In a computing network implementing an adaptive load balancing scheme, an indication of a link failure in the computing network is received. When forwarding a packet to the failed link, the entropy of the packet is incremented by a constant. A new output port is selected for the associated Equal-Cost Multi-Path (ECMP) group. The entropy in the packet is incremented by the constant if the re-hash leads to another failed link. In response to determining that the ECMP group leading to a destination has no working ports, a hash function is applied to select another working port.

## Description

### CROSS-REFERENCE TO RELATED APPLICATION

This application claims the benefit of US provisional application number 63/687,298 filed on August 28, 2024, entitled "Stateless Network Failure Recovery", and claims the benefit of US provisional application number 63/687,294 filed on August 26, 2024, entitled "Loss Mitigation via Path Choice Freezing"

### BACKGROUND

As more data and services are stored and provided online via network connections, providing high performance and an optimal and reliable user experience is an important consideration for network providers and computer networking device manufacturers. In various examples, computer networking devices can include electronic devices that communicate and interact over a computer network via network packets such as gateways, routers, and switches. A network packet can be a formatted unit of data containing control information and user data. Such computer networking devices can implement software programs that process and execute network operations such as packet routing, rewriting, filtering and so forth.

Networking is becoming increasingly important for a number of use cases. For example, AI models such as Large Language Models (LLMs) are trained on clusters of thousands of GPUs, and network latency is critical for system performance. High-performance computing (HPC) is another use case that requires demanding network performance in terms of bandwidth and latency.

It is with respect to these and other considerations that the disclosure made herein is presented.

### SUMMARY

The techniques described herein enhance the performance of computer networks by implementing the methods described herein. The techniques of the present disclosure enable several technical benefits over existing approaches, in particular for enabling architectures that optimize network protocols such as Ethernet for high performance applications such as artificial intelligence AI and high-performance computing (HPC). Technical benefits include improved bandwidth, scale, and lower latency.

When a link in a packet-spraying fat tree network fails, a large number of packets may be transmitted into the faulty network before the routes are fixed using border gateway protocol (BGP) or some other form of re-routing methodology. The re-routing may take several milliseconds, which is sufficient for hundreds of megabytes to be sent into the faulty network on fast links. While it is possible to denylist the timed-out entropies at the injection point, this would require waiting for a timeout to determine that a path is actually broken. Furthermore, the sending of a "path failure" packet back to the source would require significant changes to the switch packet processing pipeline. Additionally, some failures can result in live locks.

The disclosed embodiments provide a recovery mechanism for link failures in a packet-spraying fat tree network:
- Each time that a switch attempts to forward a packet to a failed link, the switch increments the entropy in the packet by a constant k (default: k=1).
- The switch re-hashes, which likely chooses a new output port for the Equal-Cost Multi-Path (ECMP) group. If the switch hashes to another failed link, step 1 is repeated.
- If the switch detects that the ECMP group leading to the destination has no working ports, then the switch applies the hash function to select any other working port
- In all cases, the source port of the packet is not considered a valid forwarding port

In all cases, the packet will eventually reach the destination node if a path to the destination node exists. The mechanism converges efficiently, and additional state is not required. If there are no additional failures in the network, then all packets will travel the same route deterministically and thus packets will remain in order.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIGs. 1A through 1C are diagrams illustrating example architectures in accordance with the present disclosure;
FIG. 2 is a flowchart depicting an example procedure in accordance with the present disclosure;
FIG. 3 is a diagram illustrating an example architecture in accordance with the present disclosure;
FIG. 4 is a diagram illustrating an example architecture in accordance with the present disclosure;
FIG. 5 is a diagram illustrating an example architecture in accordance with the present disclosure;
FIG. 6 is an example computing system in accordance with the present disclosure.
FIG. 7 is an example computing system in accordance with the present disclosure.

### DETAILED DESCRIPTION

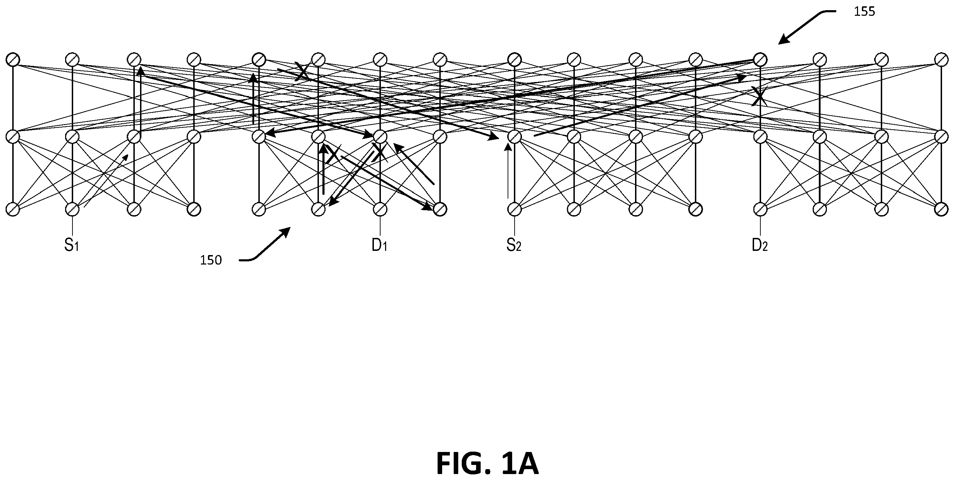

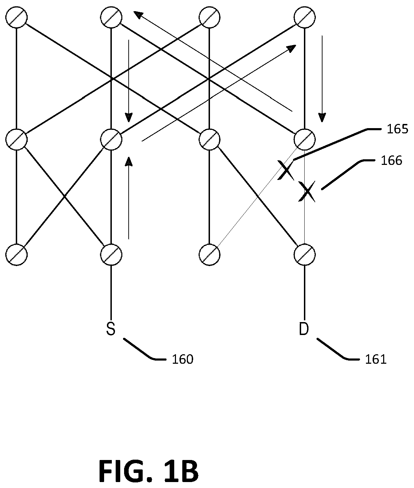

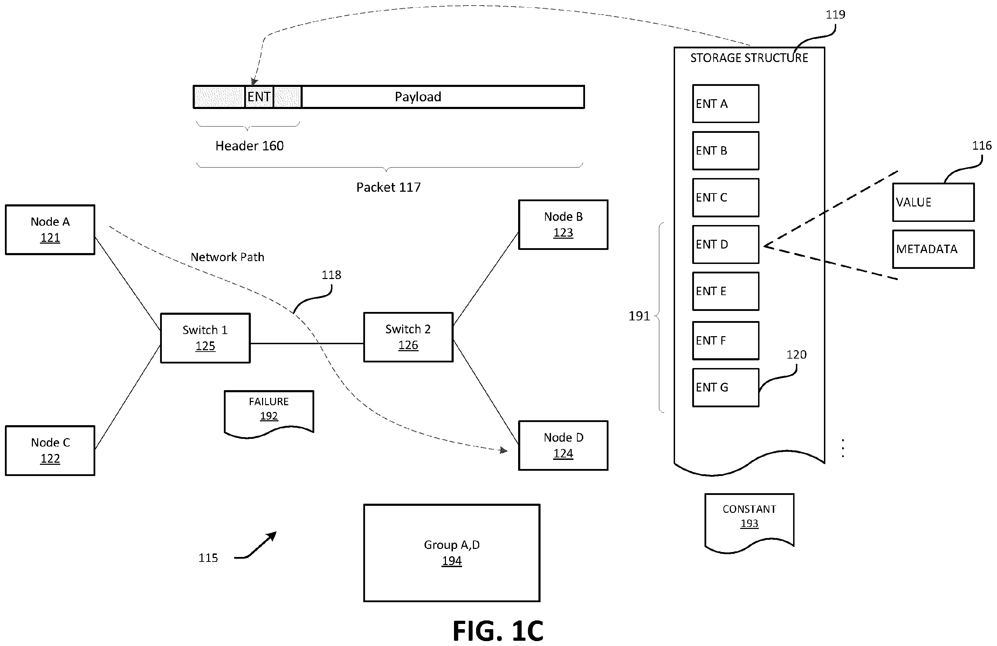

The techniques discussed herein enhance the functionality of computer networking. Various examples, scenarios, and aspects that enable enhanced networking techniques are described below with respect to FIGS. 1-7.

As used herein, entropy refers to a value or signal that can be used to select or change a network path. For example, when using ECMP, the entropy is used to change the ECMP hash, which determines the route through the switch. A change of any value in the header will cause the ECMP hash function to select another random path. Entropy in this context is therefore any bit(s), value, or signals that corresponds to a network route and is usable to select or change a network path as indicated to a device on the network, where packets with the same entropy take the same path, and packets with different entropies may take different paths (and may also randomly hash to the same path again). The term entropy may also be referred to as a routing selector or routing value.

Initially (e.g., before any acknowledgements (ACKs) are received), a different entropy is generated for each transmitted packet. In an embodiment, the entropy can be generated randomly or using round-robin across a list or range of entropies. In an example, the new entropy value can be the next one in the list or deterministically changed or incremented.

As ACKs are received, entropies that are acknowledged not to be congested (i.e., good entropies) are saved into a data structure such as a circular FIFO. It should be appreciated that other data structures can be implemented.

In response to transmitting additional data packets, a saved entropy is reused and invalidated (or otherwise prevented from being reused). If there are no valid entropies to reuse, a different entropy is used, using various methods described herein including the use of efficient mechanisms such as a counter. By implementing such a mechanism, it is possible to avoid reusing entropies that experienced congestion while recycling entropies that did not experience or otherwise run into congestion.

When there are no more transmissions for a connection, the good entropies observed per the last batch of ACKs will be buffered as described above. If the connection is flagged as "recurrent" (i.e., the good entropies will be relevant again for the same connection at a later time when the connection resumes transmission along the same set of the other recurrent connections), it would be beneficial to save these good entropies, for example offline. Otherwise, these buffered entropies will eventually expire.

Described herein as an example of how the present disclosure can be applied to an adaptive host-based load balancing scheme described as Recycled Entropy Packet Spraying (REPS), as described in APPLICATION #18/508,137 filed 11/13/2023 Docket #MS1-9896US "RECYCLED ENTROPIES PACKET SPRAYING (REPS)". To summarize the REPS mechanism, the sending host is designed to maintain a temporarily set of 'entropies' (that could be used solely or along with other entropies as an input for switch hashing functions outputting a viable forwarding switch port to choose from) that have been recently observed by the sender (e.g., via monitoring their end-to-end round-trip times) and/or acknowledged by the receiver (via explicit acknowledgement packets indicating that none of the switches on the overall path traversed towards the receiver have explicitly set an explicit congestion bit in the data packet header) to be acceptable.

REPS sources such 'good' entropies from the acknowledgement packets themselves that are designed to send the entropy information of one or more of the most recently observed data packets back to the sender. Any acknowledged entropies detected to be congested are typically not recycled in the interest of achieving better load balancing performance, and entropies acknowledged not to correspond to congested paths are typically recycled once per each corresponding ACK observation (though the present disclosure does extend to versions whereby 'good' entropies can be recycled multiple times).

A fat tree network is a structure where a tree of switches at different levels (e.g., core, aggregation, and top-of-rack). Links closer to the root of the tree (higher in the hierarchy) have more bandwidth, ensuring that bottlenecks are minimized as traffic flows upwards towards the core switches.

When a link in a packet-spraying fat tree network breaks, many packets may be sent into a black hole before the routes are fixed using BGP or some other form of re-routing. Re-routing may take several milliseconds, which may be hundreds of sent megabytes on fast links and many round-trips.

One solution would be to denylist the timed-out (or back-to-sender notified) entropies at the injection point. That would, however, require waiting for a timeout to determine that a path is actually broken. A simple solution would be to send a "path failure" packet back to the source. However, this would require significant changes to the switch packet processing pipeline.

Upcoming switches define directions of traffic as up and down the fat tree topology. If an output port on an up-path fails, then the ECMP group will hash to a different port. If an ECMP group does not contain a valid path for the destination (either up, when all up links failed, or down, when the single path to the destination failed), then the switch will send the unmodified packet to another down port or, if no down port is available, to a random live port.

However, this scheme can create live locks for two link failures as shown in FIG. 1A.

The S1->D1 pair shows a loop for link failures for level 1 150 and the S2->D2 pair shows a loop for link failures in level 2 155. A similar loop can form if all links to a destination fail, shown in FIG. 1B. FIG. 1B illustrates an example where failures 165, 166 result in failure of all links from source 160 to destination 161.

In various embodiments, the present disclosure addresses the issues noted above by implementing the following mechanism:
1. Every time, a switch attempts to forward a packet to a broken link, the switch increments the entropy in the packet by a constant k (e.g., default: k=1).
2. Then, the switch re-hashes, which likely chooses a new output port for the ECMP group - if it hashes to another failed link, repeat the step 1.
3. If the switch detects that the ECMP group leading to the destination has no working ports, then the switch applies the hash function to select any other working port (this will most likely occur on the path down in a fat tree, in which case the packet needs to travel in the wrong direction).

In all cases, the port the packet came from is not considered a valid forwarding port
While the scheme can lead to loops, it will eventually reach the destination node if there is a path to the destination node, as shown below.

Once the packet is to be forwarded to a broken link, the packet begins a journey that includes a random walk for 1 or more hops and a deterministic routing step to the destination. The random walk's first step is at the failed link, from which the packet goes to a random neighbor of the switch. The packet continues to a random neighbor at each switch that has no working output ports leading to the destination. Eventually, if the network is connected to the destination, the packet will find a switch with a valid route and routed to the destination. If the packet encounters another failed link towards the destination, a new journey will start. The random walk is guided by the hash function based on the entropy value. There are now two cases: (1) the packet is to be routed to a broken link, in which case the entropy is incremented by one and possible cycles are broken and (2) the switch has only one route to the destination and this is the source of the packet. In case (1), eventually every entropy will be cycled through, which leads to visiting all connected switches, one of which must have a route to the destination (if the hash function covers its entire co-domain). In case (2), the packet will eventually go back to some switch connected to a source node and find a route forward from there. If (2) does not succeed, the destination must be disconnected.

This random port selection scheme may lead to unnecessary turns, e.g., a packet should preferentially be routed "forward" (in the direction of the destination). If the one shortest path on the way down the tree has failed, the packet needs to take a detour. It is most efficient to take that detour by descending down and back up again later such that the additional traffic load stays in the subtree.

One optimization to have the packet continue its path forward is to resolve the ECMP group for the source address of the packet and exclude all ports in this group from the random selection on a failure. If this excludes all ports (on a good path to the destination - e.g., shortest path), a random port is selected from the set of all working ports even if the port goes in the wrong direction. This prevents the packet from going in the wrong direction if forward ports are available.

One issue that can arise with the above scheme is when all down-ports or downstream ports from a current switch are broken (as shown in FIG. 1B). The scheme can be changed as follows to address this issue. First, let the depth of the network be d, which is known by all switches, and choose only entropy values (EVs) that are multiples of d. When a switch has all down ports broken, it increments that EV according to how far the switch wants the packet to go back. Now, the other switches will forward the packet along a random (EV-based) path backwards (as determined above, following the tables according to the source IP) and at each hop decrement the counter. Then, if the counter mod d is again zero, the resulting packet is routed as usual. Optionally, some of the most significant bits can be changed with a constant as in the previous schemes (to avoid selecting exactly the same path again, even though this is unlikely).

More generally, the embodiments encode information about the network status and failures into the EV itself with switches while keeping the path deterministic, allowing for creation of additional schemes. The schemes can be efficiently implemented in switches and be backwards-compatible.

Advantages of the disclosed embodiments include:
Additional state (besides maintaining a list of failed links, which is always necessary) is not required.

If there are no additional failures into the network, all packets go the same route deterministically - and they remain in order

All network telemetry will operate correctly - Explicit Congestion Notification (ECN) or Round-Trip Time (RTT)/REPS would de-prioritize the path
Compatible with BGP re-routing (does not create cycles)
Converges quickly in the average/expected case
Compatible with topologies than other fat trees
The detour is a minimal detour.
Packets are dynamically rerouted in a deterministic manner.

FIGs. 1A, 1B, and 1C illustrate various aspects of the disclosed embodiments. In a computing network 115 implementing packet delivery contexts (PDCs), an entropy value 116 is generated for a data packet 117 to be transmitted on the computing network 115. The entropy value 116 is usable to select or change a network path 118 for the data packet 117. The network path 118 may traverse a number of network devices or nodes which may include node A 121, node B 123, node C 122, and node D 124, and switch 1 125 and switch 2 126. In response to receiving an acknowledgement message for the data packet, the entropy value 116 is saved in a storage structure 119 if the entropy value 116 is acknowledged as not congested. When transmitting an additional data packet, an oldest saved entropy 120 is reused from the data structure 119 and the oldest saved entropy value 120 is invalidated.

In an embodiment, an indication of a link failure 192 in the computing network is received. When forwarding, by a switch 125 or 126, a packet 117 to the failed link, an entropy 120 of the packet 117 is incremented by a constant 193. The switch 125, 126 selects a new output port for an associated Equal-Cost Multi-Path (ECMP) group 194 using re-hashing. The entropy 120 of the packet 117 is incremented by the constant 193 if the re-hash leads to another failed link. In response to determining that the ECMP group 194 leading to a destination has no working ports, a hash function is applied to select another working port. In some embodiments, the source port of the packet 117 is not considered a valid forwarding port.

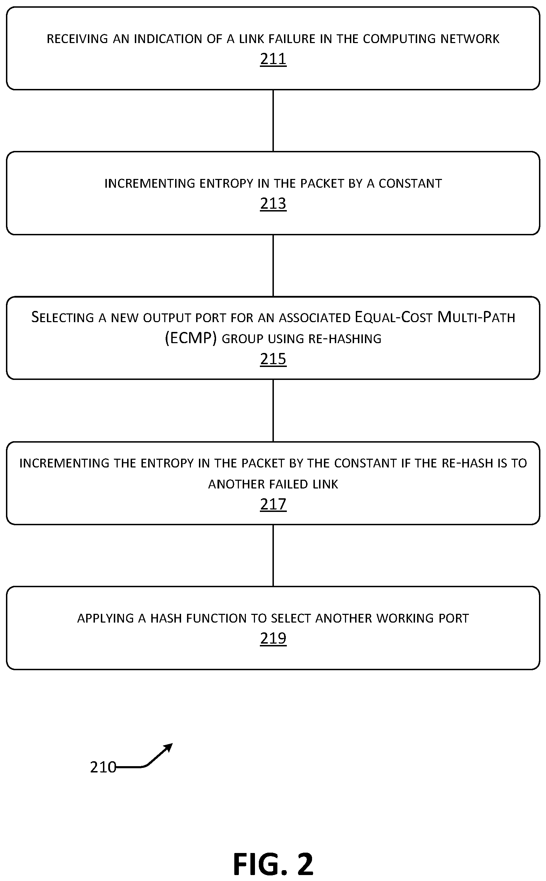

Turning now to FIG. 2, illustrated is an example operational procedure 210 for managing a computing network.

Such an operational procedure can be provided by one or more components illustrated in FIGs. 1-7. The operational procedure may be implemented in a system comprising one or more network devices or computing devices. It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

It should also be understood that the illustrated methods can end at any time and need not be performed in their entireties. Some or all operations of the methods, and/or substantially equivalent operations, can be performed by execution of computer-readable instructions included on a computer-storage media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

It should be appreciated that the logical operations described herein are implemented (1) as a sequence of computer implemented acts or program modules running on a computing system such as those described herein) and/or (2) as interconnected machine logic circuits or circuit modules within the computing system. The implementation is a matter of choice dependent on the performance and other requirements of the computing system. Accordingly, the logical operations may be implemented in software, in firmware, in special purpose digital logic, and any combination thereof. Thus, although the routine 210 is described as running on a system, it can be appreciated that the routine 210 and other operations described herein can be executed on an individual computing device or several devices.

Referring to FIG. 2, operation 211 illustrates receiving an indication of a link failure in the computing network.

Operation 213 illustrates when forwarding, by a switch, a packet to the failed link, incrementing an entropy of the packet by a constant.

Operation 215 illustrates selecting, by the switch, a new output port for an associated Equal-Cost Multi-Path (ECMP) group using re-hashing.

Operation 217 illustrates incrementing the entropy of the packet by the constant if the re-hash leads to another failed link.

Operation 219 illustrates in response to determining that the ECMP group leading to a destination has no working ports, applying a hash function to select another working port.

In an embodiment, the source port of the packet is not considered a valid forwarding port.

For ease of understanding, the processes discussed in this disclosure are delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted. Furthermore, one or more of the provided operations may also be executed in parallel and/or interleaved when processing multiple network packets.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated methods can end at any time and need not be performed in their entireties. Some or all operations of the methods, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the routine 200 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the routine 200 may be also implemented in other ways. In addition, one or more of the operations of the routine 200 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

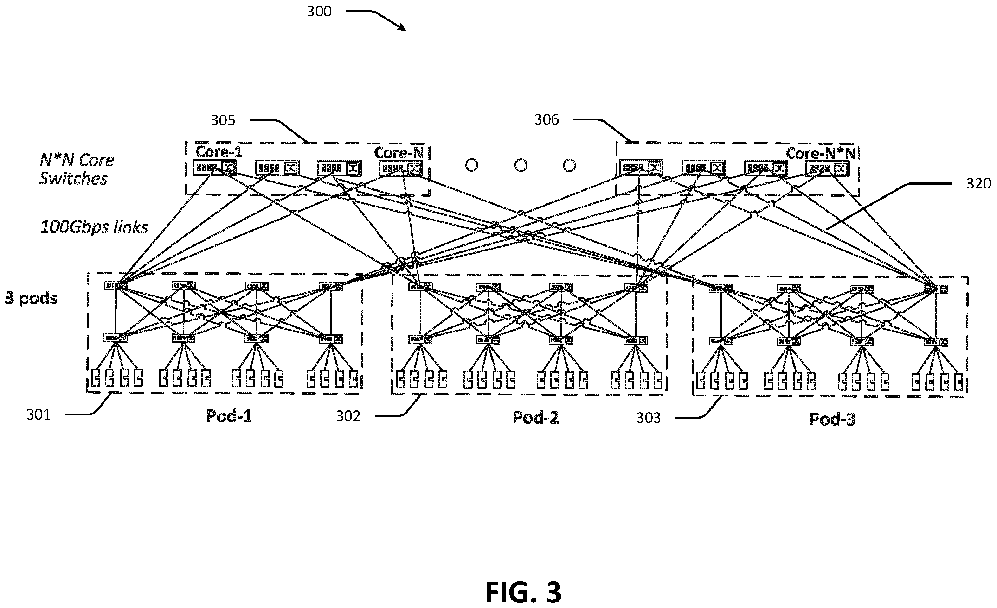

FIG. 3 illustrates an example communications network environment 300 containing N*N core switches such as Core-1 305 through Core N*N 306. The N*N core switches are communicatively coupled, in this example, to three pods 301, 302, 303 via 100 Gbps links 320. In an example, each pod can include set of computing nodes and network devices that are configured to run containers or virtual machines.

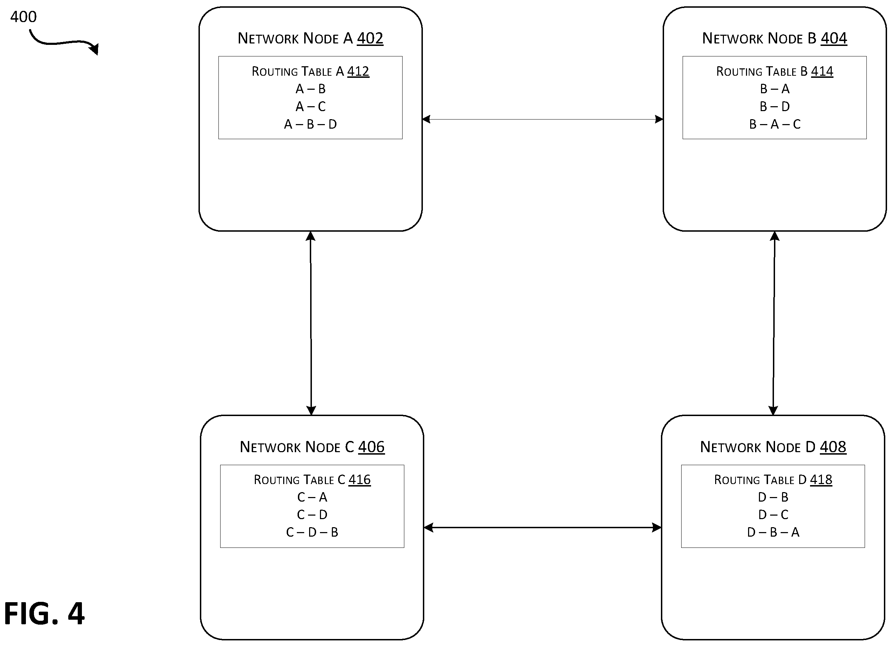

FIG. 4 illustrates an example communications network environment 400 containing a first communication node A 402, a second communication node B 404, a third communication node C 406, and a fourth communication node D 408. In addition, each node is configured with an associated routing table A-D 412-418. Each routing table contains data defining paths with which a node can route data from itself to other nodes within the network. It should be understood that the routing tables can be populated through any method such as static routing or dynamic routing. Furthermore, the routing tables can be modified automatically by the nodes themselves or manually such as by a system engineer.

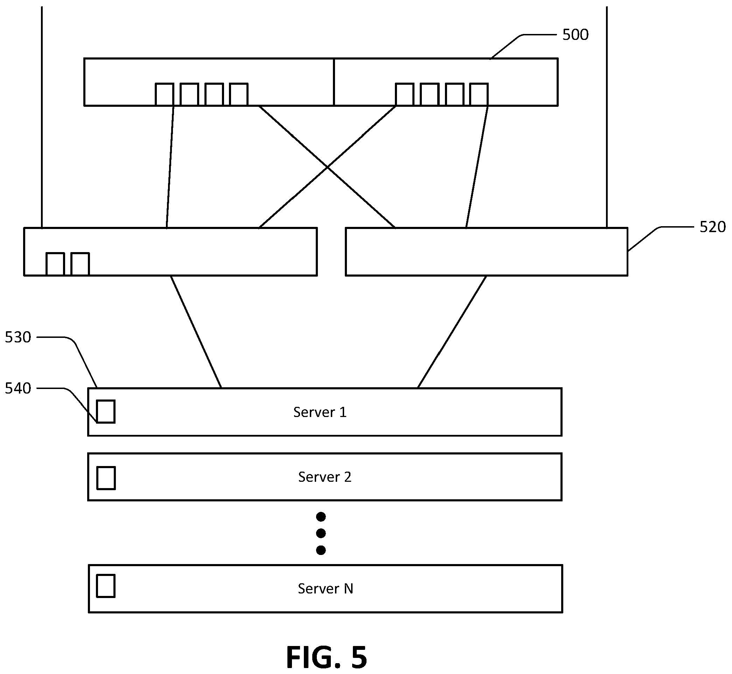

With reference to FIG. 5, illustrated is an example network topology. In one implementation, various network devices may be configured to provide data to servers (hosts) 530. In an embodiment, each network device 520 may be fully connected to each server 530. FIG. 5 also shows that network device 520 may be coupled to additional network devices 500. The servers 530 may include NICs 540 for providing network connectivity. The various embodiments disclosed herein can be implemented in NICs 540, network device 520, servers 530, or other devices in a computing network.

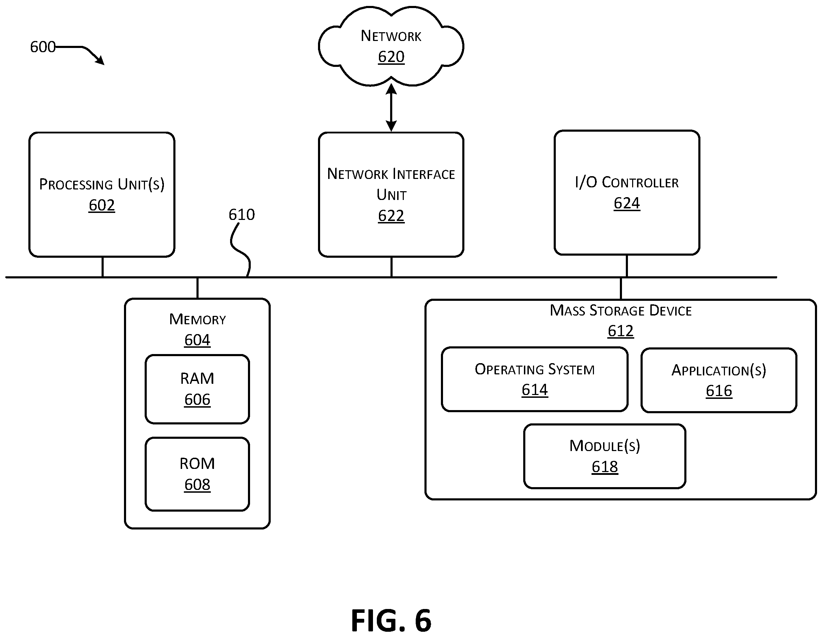

FIG. 6 shows additional details of an example computer architecture 600 for a device, such as a computer or a server configured as part of a cloud-based platform or system, capable of executing computer instructions (e.g., a module or a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s). In various examples, the processing unit(s) of the processing system 602 are distributed. Stated another way, one processing unit of the processing system 602 may be located in a first location (e.g., a rack within a datacenter) while another processing unit of the processing system 602 is located in a second location separate from the first location.

Processing unit(s), such as processing unit(s) of processing system 602, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

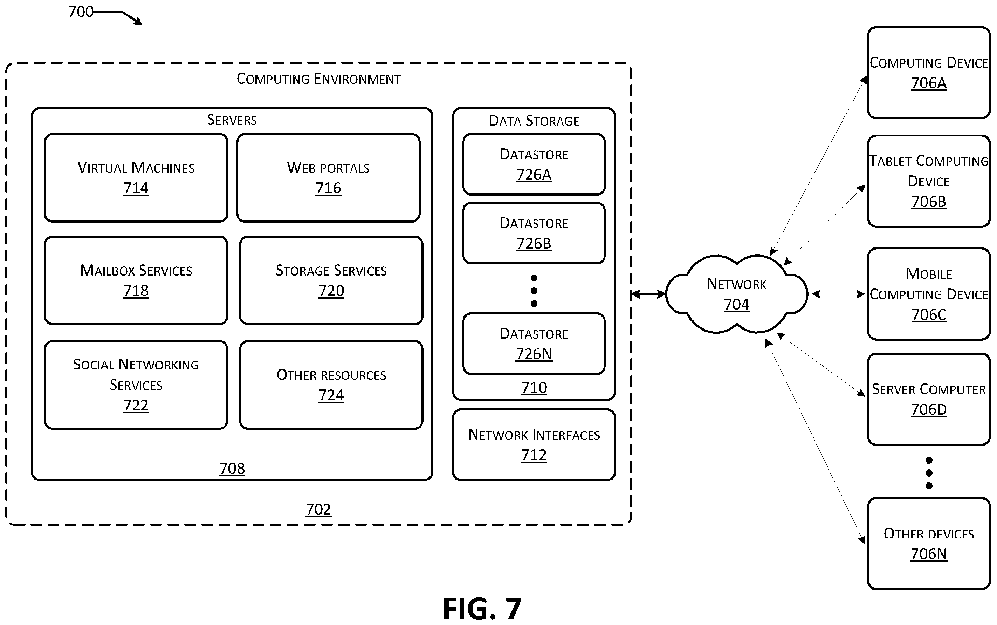

FIG. 7 depicts an illustrative distributed computing environment 700 capable of executing the software components described herein. Thus, the distributed computing environment 700 illustrated in FIG. 7 can be utilized to execute any aspects of the software components presented herein. For example, the distributed computing environment 700 can be utilized to execute aspects of the software components described herein.

Accordingly, the distributed computing environment 700 can include a computing environment 702 operating on, in communication with, or as part of the network 704. The network 704 can include various access networks. One or more client devices 706A-706N (hereinafter referred to collectively and/or generically as "computing devices 706") can communicate with the computing environment 702 via the network 704. In one illustrated configuration, the computing devices 706 include a computing device 706A such as a laptop computer, a desktop computer, or other computing device; a slate or tablet computing device ("tablet computing device") 706B; a mobile computing device 706C such as a mobile telephone, a smart phone, or other mobile computing device; a server computer 706D; and/or other devices 706N. It should be understood that any number of computing devices 706 can communicate with the computing environment 702.

In various examples, the computing environment 702 includes servers 708, data storage 710, and one or more network interfaces 712. The servers 708 can host various services, virtual machines, portals, and/or other resources. In the illustrated configuration, the servers 708 host virtual machines 714, Web portals 716, mailbox services 718, storage services 720, and/or social networking services 722. As shown in FIG. 7 the servers 708 also can host other services, applications, portals, and/or other resources ("other resources") 724.

As mentioned above, the computing environment 702 can include the data storage 710. According to various implementations, the functionality of the data storage 710 is provided by one or more databases operating on, or in communication with, the network 704. The functionality of the data storage 710 also can be provided by one or more servers configured to host data for the computing environment 700. The data storage 710 can include, host, or provide one or more real or virtual datastores 726A-726N (hereinafter referred to collectively and/or generically as "datastores 726"). The datastores 726 are configured to host data used or created by the servers 708 and/or other data. That is, the datastores 726 also can host or store web page documents, word documents, presentation documents, data structures, algorithms for execution by a recommendation engine, and/or other data utilized by any application program. Aspects of the datastores 726 may be associated with a service for storing files.

The computing environment 702 can communicate with, or be accessed by, the network interfaces 712. The network interfaces 712 can include various types of network hardware and software for supporting communications between two or more computing devices including the computing devices and the servers. It should be appreciated that the network interfaces 712 also may be utilized to connect to other types of networks and/or computer systems.

It should be understood that the distributed computing environment 700 described herein can provide any aspects of the software elements described herein with any number of virtual computing resources and/or other distributed computing functionality that can be configured to execute any aspects of the software components disclosed herein. According to various implementations of the concepts and technologies disclosed herein, the distributed computing environment 700 provides the software functionality described herein as a service to the computing devices. It should be understood that the computing devices can include real or virtual machines including server computers, web servers, personal computers, mobile computing devices, smart phones, and/or other devices. As such, various configurations of the concepts and technologies disclosed herein enable any device configured to access the distributed computing environment 700 to utilize the functionality described herein for providing the techniques disclosed herein, among other aspects.

In an embodiment, a method for managing a computing network implementing an adaptive load balancing scheme comprises:
encoding, by switches in the network, information about network status and failures into entropy values (EVs) while with switches while keeping the path deterministic; and
sending packets with the encoded information.

In an example, in a computing network implementing an adaptive load balancing scheme, an indication of a link failure in the computing network is received. When forwarding a packet to the failed link, the entropy of the packet is incremented by a constant. A new output port is selected for the associated Equal-Cost Multi-Path (ECMP) group. The entropy in the packet is incremented by the constant if the re-hash leads to another failed link. In response to determining that the ECMP group leading to a destination has no working ports, a hash function is applied to select another working port.

The disclosure presented herein encompasses the subject matter set forth in the following example clauses.

Clause 1: A method for managing a computing network implementing an adaptive load balancing scheme, the method comprising:
receiving an indication of a link failure in the computing network;
when forwarding, by a switch, a packet to the failed link, incrementing an entropy of the packet by a constant;
selecting, by the switch, a new output port for an associated Equal-Cost Multi-Path (ECMP) group using re-hashing;
incrementing the entropy of the packet by the constant if the re-hash leads to another failed link; and
in response to determining that the ECMP group leading to a destination has no working ports, applying a hash function to select another working port;
wherein a source port of the packet is not considered a valid forwarding port.

Clause 2: The method of clause 1, wherein the computing network is a fat tree network.

Clause 3: The method of any of clauses 1-2, further comprising resolving the ECMP group for a source address of the packet and excluding all ports in the ECMP group from random selection in response to a failure.

Clause 4: The method of any of clauses 1-3, wherein if all ports on a good path to the destination are excluded, selecting a random port from a set of remaining ports.

Clause 5: The method of any of clauses 1-4, wherein if all downstream ports from the switch are failed, then selecting only entropy values that are multiples of a depth of the computing network.

Clause 6: The method of any of clauses 1-5, wherein if all down ports from a current switch are failed, then changing one or more significant bits of the entropy by a constant.

Clause 7: The method of any of clauses 1-6, wherein the entropy is a bit, value, or signal that corresponds to a network route and is usable to select or change a network path as indicated to a device on the computing network, where packets with a same entropy take a same path.

Clause 8: A system for managing a computing network implementing an adaptive load balancing scheme, the system comprising a network device and computing node, the system configured to perform operations comprising:
receiving an indication of a link failure in the computing network;
when forwarding, by a switch, a packet to the failed link, incrementing an entropy of the packet by a constant;
performing re-hashing, by the switch, to select a new output port for an associated Equal-Cost Multi-Path (ECMP) group;
incrementing the entropy of the packet by the constant if the re-hash is to another failed link; and
in response to determining that the ECMP group leading to a destination has no working ports, re-hashing to select another working port.

Clause 9: The system of clause 8, wherein the computing network is a fat tree network.

Clause 10: The system of any of clauses 8 and 9, the system further configured to perform operations comprising resolving the ECMP group for a source address of the packet and excluding all ports in the ECMP group from random selection in response to a failure.

Clause 11: The system of any clauses 8-10, wherein if all ports on a shortest path are excluded, selecting a random port from a set of all working ports.

Clause 12: The system of any clauses 8-11, wherein if all down ports from a current switch are broken, then selecting only entropy values that are multiples of a depth of the computing network.

Clause 13: The system of any clauses 8-12, wherein if all down ports from a current switch are broken, then changing one or more significant bits with a constant.

Clause 14: The system of any clauses 8-13, wherein the entropy is a bit, value, or signal that corresponds to a network route and is usable to select or change a network path as indicated to a device on the computing network, where packets with a same entropy take a same path.

Clause 15: A computer readable storage medium comprising computer readable instructions for managing a computing network implementing an adaptive load balancing scheme, the computer readable instructions operable, when executed by a computing node, to perform operations comprising:
receiving an indication of a link failure in the computing network;
when forwarding, by a switch, a packet to the failed link, incrementing an entropy of the packet by a constant;
re-hashing, by the switch, to select a new output port for an associated Equal-Cost Multi-Path (ECMP) group;
incrementing the entropy of the packet by the constant if the re-hash is to another failed link; and
in response to determining that the ECMP group leading to a destination has no working ports, re-hashing to select another working port.

Clause 16: The computer readable storage medium of clause 15, wherein the computing network is a fat tree network.

Clause 17: The computer readable storage medium of any of clauses 15 and 16, further comprising computer readable instructions operable, when executed by a computing node, to perform operations comprising resolving the ECMP group for a source address of the packet and excluding all ports in the ECMP group from random selection in response to a failure.

Clause 18: The computer readable storage medium of any clauses 15-17, wherein if all ports are excluded, selecting a random port from a set of all working ports.

Clause 19: The computer readable storage medium of any clauses 15-18, wherein if all down ports from a current switch are broken, then selecting only entropy values that are multiples of a depth of the computing network.

Clause 20: The computer readable storage medium of any clauses 15-19, wherein if all down ports from a current switch are broken, then changing one or more significant bits with a constant.

Clause 21: The computer readable storage medium of any clauses 15-20 further comprising resolving the ECMP group for a source address of the packet and excluding all ports in the ECMP group from random selection in response to a failure.

The disclosure presented herein also encompasses the subject matter set forth in the following example clauses.

Clause 1: A method for managing a computing network implementing an adaptive load balancing scheme, the method comprising:
receiving an indication of a link failure in the computing network; and
in response to receiving the indication, implementing a temporary freeze mode preventing the adaptive load balancing scheme from attempting further path exploration; and
using a subset of routing options known to having been recently acknowledged to be valid.

Clause 2: The method of clause 1, wherein the link failure is detected by:
sending periodic proactive probes across multiple entropies toward a destination; and
observing a missing ACK timeout occurrence.

Clause 3: The method of any of clauses 1-2, further comprising probing across multiple paths of the computing network and determining paths that are candidate paths prior to rerouting traffic.

Clause 4: The method of any of clauses 1-3, wherein a time period for the temporary freeze mode is based on a duration by which the link failure is expected to be operational.

Clause 5: The method of any of clauses 1-4, wherein a time period for the temporary freeze mode is a constant.

Clause 6: The method of any of clauses 1-5, further comprising removing the temporary freeze mode after sending probe messages with same entropies that were determined to have failed.

Clause 7: The method of any of clauses 1-6, further comprising removing the temporary freeze mode after generating a set of different entropies and probing with the set to confirm whether probes are determined to be lost.

Clause 8: A system for managing a computing network implementing an adaptive load balancing scheme, the system comprising a network device and computing node, the system configured to perform operations comprising:
receiving an indication of a link failure in the computing network; and
in response to receiving the indication, implementing a temporary freeze mode preventing the adaptive load balancing scheme from attempting further path exploration; and
using a subset of routing options known to having been recently acknowledged to be valid.

Clause 9: The system of clause 8, wherein the link failure is detected by:
sending periodic proactive probes across multiple entropies toward a destination; and
observing a missing ACK timeout occurrence.

Clause 10: The system of any of clauses 8 and 9, the system further configured to perform operations comprising probing across multiple paths of the computing network and determining paths that are candidate paths prior to rerouting traffic.

Clause 11: The system of any clauses 8-10, wherein a time period for the temporary freeze mode is based on a duration by which the link failure is expected to be operational.

Clause 12: The system of any clauses 8-11, wherein a time period for the temporary freeze mode is a constant.

Clause 13: The system of any clauses 8-12, the system further configured to perform operations comprising removing the temporary freeze mode after sending probe messages with same entropies that were determined to have failed.

Clause 14: The system of any clauses 8-13, the system further configured to perform operations comprising removing the temporary freeze mode after generating a set of different entropies and probing with the set to confirm whether probes are determined to be lost.

Clause 15: A computer readable storage medium comprising computer readable instructions for managing a computing network implementing an adaptive load balancing scheme, the computer readable instructions operable, when executed by a computing node, to perform operations comprising:
receiving an indication of a link failure in the computing network; and
in response to receiving the indication, implementing a temporary freeze mode preventing the adaptive load balancing scheme from attempting further path exploration; and
using a subset of routing options known to having been recently acknowledged to be valid.

Clause 16: The computer readable storage medium of clause 15, wherein the link failure is detected by:
sending periodic proactive probes across multiple entropies toward a destination; and
observing a missing ACK timeout occurrence.

Clause 17: The computer readable storage medium of any of clauses 15 and 16, further comprising computer readable instructions operable, when executed by a computing node, to perform operations comprising probing across multiple paths of the computing network and determining paths that are candidate paths prior to rerouting traffic.

Clause 18: The computer readable storage medium of any clauses 15-17, wherein a time period for the temporary freeze mode is based on a duration by which the link failure is expected to be operational.

Clause 19: The computer readable storage medium of any clauses 15-18, wherein a time period for the temporary freeze mode is a constant.

Clause 20: The computer readable storage medium of any clauses 15-19, further comprising computer readable instructions operable, when executed by a computing node, to perform operations comprising removing the temporary freeze mode after sending probe messages with same entropies that were determined to have failed.

## Claims

1. A method for managing a computing network implementing an adaptive load balancing scheme, the method comprising:
receiving (211) an indication of a link failure (192) in the computing network;
when forwarding, by a switch (125), a packet to the failed link, incrementing (213) an entropy (120) of the packet by a constant (193);
selecting (215), by the switch, a new output port for an associated Equal-Cost Multi-Path, ECMP, group (194) using re-hashing;
incrementing (217) the entropy of the packet by the constant if the re-hash leads to another failed link; and
in response to determining that the ECMP group leading to a destination has no working ports, applying (219) a hash function to select another working port;
wherein a source port of the packet is not considered a valid forwarding port.

2. The method of claim 1, wherein the computing network is a fat tree network.

3. The method of claim 1 or claim 2, further comprising resolving the ECMP group for a source address of the packet and excluding all ports in the ECMP group from random selection in response to a failure.

4. The method of any previous claim, wherein if all ports on a good path to the destination are excluded, selecting a random port from a set of remaining ports.

5. The method of any previous claim, wherein either:
if all downstream ports from the switch are failed, then selecting only entropy values that are multiples of a depth of the computing network; or
if all down ports from a current switch are failed, then changing one or more significant bits of the entropy by a constant.

6. The method of any previous claim, wherein the entropy is a bit, value, or signal that corresponds to a network route and is usable to select or change a network path as indicated to a device on the computing network, where packets with a same entropy take a same path.

7. A system for managing a computing network implementing an adaptive load balancing scheme, the system comprising a network device and computing node, the system configured to perform operations comprising:
receiving (211) an indication of a link failure (192) in the computing network;
when forwarding, by a switch (125), a packet to the failed link, incrementing (213) an entropy (120) of the packet by a constant (193);
performing re-hashing, by the switch, to select (215) a new output port for an associated Equal-Cost Multi-Path, ECMP, group (194);
incrementing (217) the entropy of the packet by the constant if the re-hash is to another failed link; and
in response to determining that the ECMP group leading to a destination has no working ports, re-hashing (219) to select another working port.

8. The system of claim 7, wherein the computing network is a fat tree network.

9. The system of claim 7 or claim 8, further comprising resolving the ECMP group for a source address of the packet and excluding all ports in the ECMP group from random selection in response to a failure.

10. The system of any of claims 7 to 9, wherein if all ports on a shortest path are excluded, selecting a random port from a set of all working ports.

11. The system of any of claims 7 to 10, wherein if all down ports from a current switch are broken, then either:
selecting only entropy values that are multiples of a depth of the computing network; or
changing one or more significant bits with a constant.

12. The system of any of claims 7 to 11, wherein the entropy is a bit, value, or signal that corresponds to a network route and is usable to select or change a network path as indicated to a device on the computing network, where packets with a same entropy take a same path.

13. A computer readable storage medium comprising computer readable instructions for managing a computing network implementing an adaptive load balancing scheme, the computer readable instructions operable, when executed by a computing node, to perform operations comprising:
receiving (211) an indication of a link failure (192) in the computing network;
when forwarding, by a switch (125), a packet to the failed link, incrementing (213) an entropy (120) of the packet by a constant (193);
re-hashing, by the switch, to select (215) a new output port for an associated Equal-Cost Multi-Path (ECMP) group (194);
incrementing (217) the entropy of the packet by the constant if the re-hash is to another failed link; and
in response to determining that the ECMP group leading to a destination has no working ports, re-hashing (219) to select another working port.

14. The computer readable storage medium of claim 13, wherein if all ports are excluded, selecting a random port from a set of all working ports.

15. The computer readable storage medium of claim 13 or claim 14, wherein if all down ports from a current switch are broken, then either:
selecting only entropy values that are multiples of a depth of the computing network; or
changing one or more significant bits with a constant.
